# EUROPEAN PATENT APPLICATION

(11) **EP 4 595 788 A1**
(43) Date of publication of application: **06.08.2025**
(21) Application number: 25152785.9
(22) Date of filing: 20.01.2025
(51) Int. Cl.: A24F 40/40, H01M 50/247, H01M 50/271, H01R 13/05, H01R 13/11, H01R 13/512

(54) **BATTERY ASSEMBLY AND ELECTRONIC ATOMIZATION DEVICE**

(30) Priority: 26.01.2024 CN 202420212460 U
(71) Applicant: Shenzhen Verdewell Technology Limited, Shenzhen, Guangdong 518102 (CN)
(72) Inventor: OUYANG, Wenting, Shenzhen 518102 (CN); LI, Shaowen, Shenzhen 518102 (CN); GUO, Xiongwei, Shenzhen 518102 (CN)
(74) Representative: Gevers Patents

(57) **Abstract**

A battery assembly (100) comprises a battery core (110), an electrical connecting base (120), and a battery cover (150). The battery core includes two electrode terminals (111). Two insertion holes are formed on the electrical connecting base (120). The two electrode terminals are respectively in pluggable fit with the two insertion holes and are detachable from the electrical connecting base. The electrode terminal forms an electrical connection with the electrical connecting base after being inserted into the insertion hole. The battery cover is configured to detachably cover the side of the battery core facing away from the electrical connecting base.

## Description

### TECHNICAL FIELD

This application relates to the field of aerosol generation technologies, and more specifically, to a battery assembly and an electronic atomization device.

### BACKGROUND

An electronic atomization device is configured to heat and atomize an atomization medium to form an aerosol after being powered on, and the aerosol is guided out through an airflow channel for a user to inhale. Currently, many electronic atomization devices are provided as disposable products, and are discarded as a whole after being used. To ensure reliability of the electrical connection between a battery core and an atomizer, the battery core is generally mounted in a non-detachable manner. As a result, when the electronic atomization device is discarded, the battery core cannot be removed in time, causing environmental pollution because the battery core is not recycled for a long time.

### SUMMARY

An objective of embodiments of this application is to provide a battery assembly and an electronic atomization device, to resolve a technical problem of environment pollution because a battery core in the electronic atomization device cannot be removed in time in the related art.

To achieve the foregoing objective, a technical solution used in this application is to provide a battery assembly configured to supply power to an atomizer, where the battery assembly includes a battery core, an electrical connecting base, and a battery cover; the battery core includes two electrode terminals; two insertion holes are formed on the electrical connecting base, the two electrode terminals are respectively in pluggable fit with the two insertion holes and are detachable from the electrical connecting base, the electrode terminals form an electrical connection with the electrical connecting base after being inserted into the insertion holes, and the electrical connecting base is configured to be electrically connected to the atomizer; and the battery cover is configured to detachably cover the side of the battery core facing away from the electrical connecting base.

In an embodiment, the electrical connecting base includes a base body and a conductive member, the insertion hole is formed in the base body, the conductive member is arranged in the insertion hole, and when the electrode terminal is inserted into the insertion hole, the conductive member elastically abuts against the electrode terminal.

In an embodiment, the conductive member includes at least two elastic sheets spaced apart from one another along a circumferential direction and configured to elastically abut against the outer peripheral wall of the electrode terminal respectively.

In an embodiment, the battery assembly further includes a protective base, the protective base is fixedly connected to the battery core, and an accommodating cavity formed on the protective base and configured to accommodate the two electrode terminals; and the electrical connecting base includes a plug-in portion, the plug-in portion is in pluggable fit with the accommodating cavity, and the insertion hole passes through the plug-in portion.

In an embodiment, the battery cover is arranged to be fixed to a housing of an electronic atomization device by threaded connection, or the battery cover is configured to be fixed to the housing of the electronic atomization device by snap-fitting.

In an embodiment, the battery assembly further includes an adapter base, and the adapter base is fixedly connected to the side of the battery core facing away from the electrical connecting base; and the battery cover is detachably connected to the adapter base, and when the battery cover is detached form the adapter base, the adapter base and the battery core can be removed together.

In an embodiment, the battery cover is mounted around the adapter base, the inner side wall of the battery cover is provided with a first abutting portion, the outer side wall of the adapter base is provided with a second abutting portion, and the first abutting portion is located on the side of the second abutting portion facing the battery core; and the first abutting portion abuts against the second abutting portion, or the first abutting portion abuts against the second abutting portion after withdrawing in a direction away from the electrical connecting base by a preset distance.

In an embodiment, the battery cover is mounted around the battery core with an interference fit; or
the battery assembly further includes an adapter base, the adapter base is fixedly connected to the side of the battery core facing away from the electrical connecting base, and the battery cover is mounted around the adapter base with an interference fit.

In an embodiment, the conductive member further comprises a connecting sheet and a conductive sheet, the connecting sheet is configured to connect the elastic sheets into a whole, the conductive sheet is connected to the connecting sheet.

In an embodiment, the adapter base comprises a top plate adhered to the battery core and a first side plate formed on a side of the top plate facing away from the battery core, a first through slot extending along an axial direction of the battery core is formed on the first side plate, and the second abutting portion is an annular plate formed on an outer side wall of the first side plate.

Beneficial effects of the battery assembly provided in this application are as follows. According to the battery assembly provided in the embodiments of this application, the electrical connecting base is arranged to implement the electrical connection between the battery core and the atomizer, and the battery core and the electrical connecting base are designed to be detachably and electrically connected, so that detachment of the battery core is facilitated. Specifically, the two insertion holes are formed on the electrical connecting base, the battery core includes two electrode terminals, the two electrode terminals are inserted into the two insertion holes and are detachable from the electrical connecting base, and the electrode terminals form an electrical connection with the electrical connecting base after being inserted into the insertion holes, that is, the battery core can be electrically connected to and separated from the electrical connecting base through inserting and plugging-in of the electrode terminals and the insertion holes, so that operation is facilitated. In addition, the battery cover detachably covers the side of the battery core facing away from the electrical connecting base. When the battery core is detached, the battery cover is first removed, and then the battery core is removed, so that operation is facilitated, the battery core is easily removed, recycling of the battery core is facilitated, and environmental pollution is reduced.

According to another aspect, this application further provides an electronic atomization device, including an atomizer, a housing, and the foregoing battery assembly, where the battery assembly is electrically connected to the atomizer, both the battery assembly and the atomizer are mounted in the housing, and a battery cover is detachably connected to the housing.

In an embodiment, the battery cover is provided with a buckle, the inner side wall of the housing is provided with a clamping slot, and the buckle snapped in the clamping slot; and the housing is further provided with a through hole extending from the outer side wall of the housing to the clamping slot.

In an embodiment, a battery compartment is formed in the housing, the battery core and the protective base are both accommodated in the battery compartment, and the electrical connecting base at least partially extends into the battery compartment to be connected to the battery core.

In an embodiment, the battery cover comprises a bottom plate and a second side plate formed on a side of the bottom plate facing the electrical connecting base, an external thread is formed on the second side plate, the second side plate is configured to be inserted into the battery compartment and fixed to the housing by threaded connection.

In an embodiment, a counter bore is formed on an outer end surface of the housing corresponding to the battery compartment, and the bottom plate is accommodated in the counter bore.

Beneficial effects of the electronic atomization device provided in this application are as follows. According to the electronic atomization device provided in the embodiments of this application, through the arrangement of the battery assembly, the battery core is easily detached, recycling of the battery core is facilitated, and environmental pollution is reduced.

### BRIEF DESCRIPTION OF THE DRAWINGS

To describe the technical solutions in the embodiments of this application more clearly, the following briefly introduces the accompanying drawings required for describing the embodiments or the related art. Apparently, the accompanying drawings in the following descriptions show only some embodiments of this application, and a person of ordinary skill in the art may still derive other accompanying drawings from these accompanying drawings without creative efforts.
FIG. 1 is a three-dimensional schematic structural diagram of an electronic atomization device according to an embodiment of this application;
FIG. 2 is a schematic longitudinal cross-sectional structural view of an electronic atomization device according to an embodiment of this application;
FIG. 3 is an enlarged schematic structural diagram of a part A in FIG. 2;
FIG. 4 is an enlarged schematic structural diagram of a part B in FIG. 2;
FIG. 5 is a schematic transverse cross-sectional structural view of an electronic atomization device corresponding to an electrical connecting base according to an embodiment of this application;
FIG. 6 is a schematic structural diagram of an electronic atomization device with an outer housing and a suction nozzle being removed according to an embodiment of this application;
FIG. 7 is a schematic structural diagram of an electrical connecting base in an electronic atomization device according to an embodiment of this application;
FIG. 8 is a schematic structural diagram of a conductive member in an electronic atomization device according to an embodiment of this application;
FIG. 9 is a schematic structural diagram of a conductive member in an electronic atomization device according to another embodiment of this application;
FIG. 10 is a schematic diagram of an assembly structure of a battery core, a protective base, and an adapter base in an electronic atomization device according to an embodiment of this application;
FIG. 11 is a schematic longitudinal cross-sectional view of an electronic atomization device according to another embodiment of this application;
FIG. 12 is an enlarged schematic diagram of a corresponding battery assembly in FIG. 11; and
FIG. 13 is a partial schematic exploded view of the electronic atomization device in FIG. 11.

### List of Reference Numerals:

100: battery assembly; 110: battery core; 111: electrode terminal; 120: electrical connecting base; 121: base body;
1211: plug-in portion; 1212: connecting portion; 1213: insertion hole; 122: conductive member; 1221: elastic sheet; 1222: connecting sheet; 1223: conductive sheet; 130: protective base; 131: accommodating cavity; 140: adapter base; 141: top plate; 142: first side plate; 143: second abutting portion; 144: first through slot; 150: battery cover; 151: bottom plate; 152: second side plate; 153: first abutting portion; 154: clamping block; 155: insertion portion; 156: external portion; 200: atomizer; 300: electrical control assembly; 400: housing; 410: inner housing; 420: outer housing; 430: battery compartment; 440: counter bore; 450: bump; 460: hook; 470: clamping slot; 480: through hole; 500: guiding structure; 510: guiding groove; 520: guiding block; 600: suction nozzle.

### DETAILED DESCRIPTION

To make technical problems to be resolved by this application, technical solutions, and beneficial effects clearer and clearer, the following further describes this application in detail with reference to the accompanying drawings and embodiments. Specific embodiments described herein are merely used to explain this application but are not intended to limit this application.

It should be noted that, when a component is referred to as "being fixed to" or "being arranged on" another component, the component may be directly on the another component or indirectly on the another component. When an element is referred to be "connected to" another element, the component may be directly connected to the another component or indirectly connected to the another component.

It should be understood that, orientation or position relationships indicated by terms such as "length", "width", "upper", "lower", "front", "rear", "left", "right", "vertical", "horizontal", "top", "bottom", "inner", and "outer" are orientation or position relationship shown based on the accompanying drawings, and are merely used for describing this application and simplifying the descriptions, rather than indicating or implying that the mentioned apparatus or element should have a particular orientation or be constructed and operated in a particular orientation, and therefore, should not be construed as a limitation to this application.

In addition, the terms "first" and "second" are used merely for the purpose of descriptions, and should not be construed as indicating or implying relative importance or implying a number of indicated technical features. Therefore, a feature qualified by "first" or "second" may explicitly or implicitly include one such feature or a number of the features. In the descriptions of embodiments of this application, "a plurality" means two or more unless otherwise explicitly and specifically limited.

Currently, for ease of use, many electronic atomization devices are provided as disposable products, and the electronic atomization devices are discarded as a whole after being used. However, when a battery core is designed, to ensure a reliable electrical connection between the battery core and an atomizer, the battery core is generally assembled in a non-detachable manner. For example, the battery core and the atomizer are connected by welding a wire, and then the wire and an electrode terminal of the battery core are wound and fixed on a housing by winding a tape. As a result, when the electronic atomization device is discarded, the battery core cannot be removed in time, causing environmental pollution because the battery core is not recycled for a long time.

To resolve the foregoing technical problem, embodiments of this application provide a battery assembly 100 and an electronic atomization device. An electrical connecting base 120 is arranged, a battery core 110 is electrically connected to an atomizer 200 through the electrical connecting base 120, and an electrode terminal 111 of the battery core 110 is detachably connected to the electrical connecting base 120. Therefore, the battery core 110 and the electrical connecting base 120 can be quickly and easily separated, thereby facilitating recycling of the battery core 110 and reducing the environmental pollution.

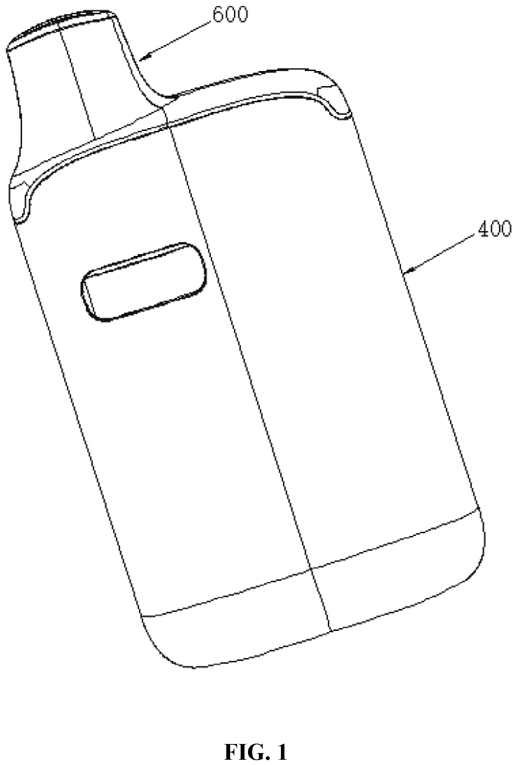

Referring to FIG. 1, FIG. 2, and FIG. 6, the electronic atomization device according to the embodiments of this application is described. The electronic atomization device includes the battery assembly 100 and the atomizer 200. The battery assembly 100 is electrically connected to the atomizer 200. The battery assembly 100 is configured to supply power to the atomizer 200. The atomizer 200 is configured to atomize an atomization medium into aerosol particles and transmit the generated aerosol particles to an oral cavity of a user.

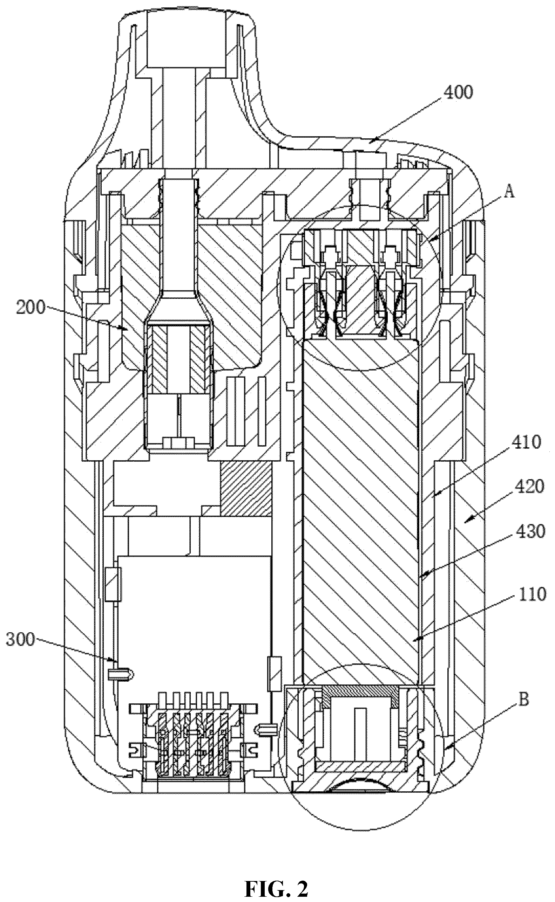

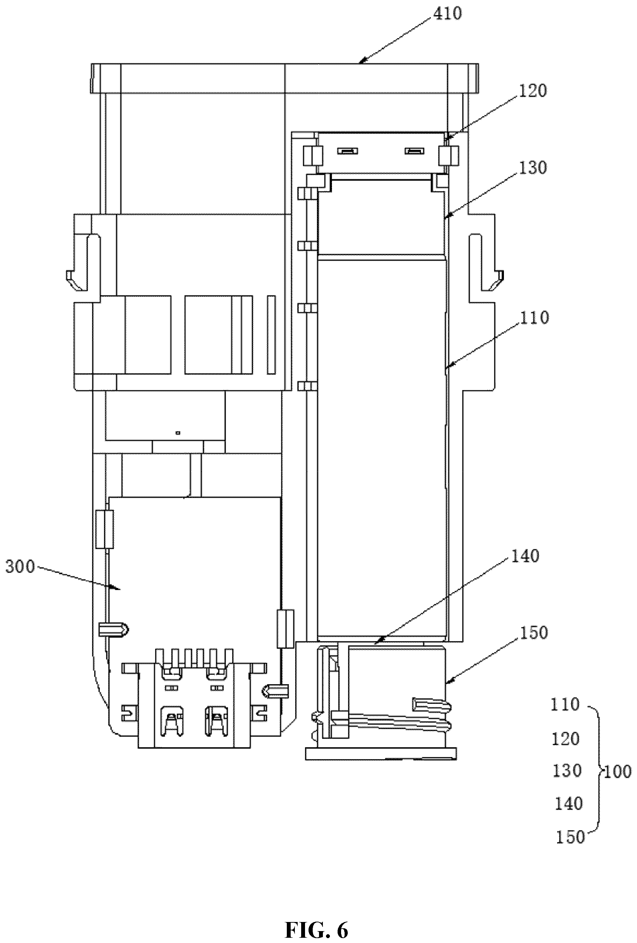

In an embodiment, referring to FIG. 2 and FIG. 6, the electronic atomization device further includes an electrical control assembly 300. The electrical control assembly 300 is electrically connected to the battery assembly 100. The electrical control assembly 300 is electrically connected to the atomizer 200. The battery assembly 100 supplies power to the atomizer 200 through the electrical control assembly 300.

In addition, the electronic atomization device further includes a housing 400. The electrical control assembly 300, the battery assembly 100, and the atomizer 200 are all mounted in the housing 400.

Referring to FIG. 2 to FIG. 4, the battery module 100 according to the embodiments of this application is described.

The battery assembly 100 includes the battery core 110, the electrical connecting base 120, and a battery cover 150. The battery core 110 includes two electrode terminals 111. Two insertion holes 1213 are formed on the electrical connecting base 120. The two electrode terminals 111 are respectively in pluggable fit with the two insertion holes 1213 and are detachable from the electrical connecting base. The electrode terminal 111 forms an electrical connection with the electrical connecting base 120 after being inserted into the insertion hole 1213. The battery cover 150 is configured to detachably cover the side of the battery core 110 facing away from the electrical connecting base 120.

The two electrode terminals 111 are located on the same side of the battery core 110, which are respectively a positive electrode terminal 111 and a negative electrode terminal 111. The electrical connecting base 120 is further electrically connected to the atomizer 200. When the two electrode terminals 111 of the battery core 110 are respectively inserted into the two insertion holes 1213 of the electrical connecting base 120 and form the electrical connection with the electrical connecting base 120, the battery core 110 forms an electrical connection with the atomizer 200. When the battery core 110 needs to be separated from the electrical connecting base 120, the electrode terminals 111 of the battery core 110 can be separated from the electrical connecting base 120 only by plugging out the battery core 110 along a direction away from the electrical connecting base 120.

In addition, the battery cover 150 detachably covers the side of the battery core 110 facing away from the electrical connecting base 120. When the battery core 110 needs to be separated from the electronic atomization device, the battery cover 150 is first detached, and then the battery core 110 is plugged out along the direction away from the electrical connecting base 120, which facilitates disassembly and assembly.

According to the battery assembly 100 in the embodiments of this application, the electrical connecting base 120 is arranged to implement the electrical connection between the battery core 110 and the atomizer 200, and the battery core 110 and the electrical connecting base 120 are designed to be detachably and electrically connected, so that detachment of the battery core 110 is facilitated. Specifically, the two insertion holes 1213 are formed on the electrical connecting base 120. The battery core 110 includes the two electrode terminals 111. The two electrode terminals 111 may be inserted into the two insertion holes 1213 and are detachable from the electrical connecting base. After the electrode terminal 111 is inserted into the insertion hole 1213, an electrical connection is formed with the electrical connecting base 120. In other words, the battery core 110 may be electrically connected to and separated from the electrical connecting base 120 through plugging-in and plugging-out between the electrode terminal 111 and the insertion hole 1213, so that the operation is convenient. In addition, the battery cover 150 detachably covers the side of the battery core 110 facing away from the electrical connecting base 120. When the battery core 110 is detached, the battery cover 150 is first removed, and then the battery core 110 is removed, so that the operation is convenient, and the battery core 110 is easily removed, which facilitates recycling of the battery core 110 and reduces the environmental pollution.

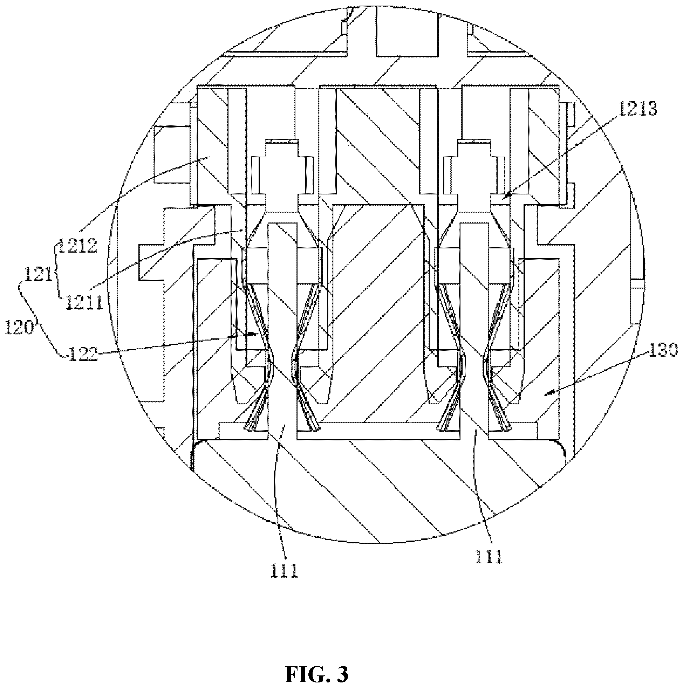

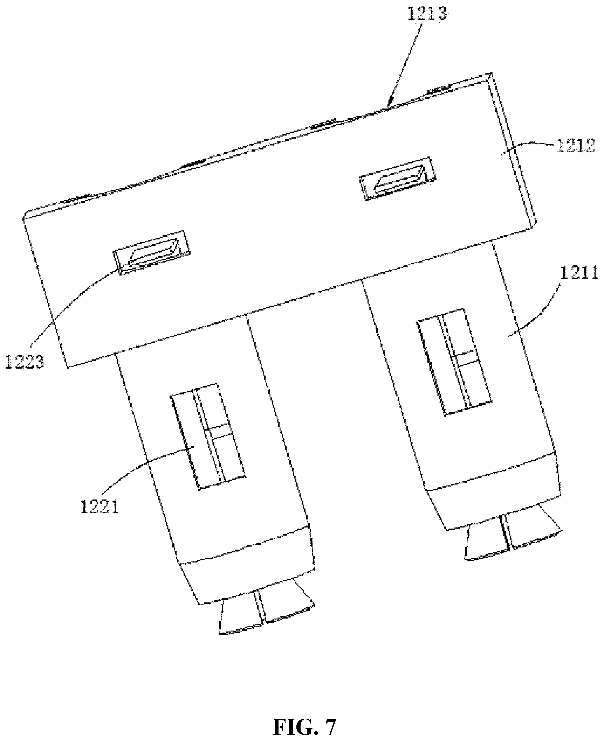

In an embodiment, referring to FIG. 3 and FIG. 7, the electrical connecting base 120 includes a base body 121 and a conductive member 122. The insertion hole 1213 is formed in the base body 121. The conductive member 122 is arranged in the insertion hole 1213. When the electrode terminal 111 is inserted into the insertion hole 1213, the conductive member 122 elastically abuts against the electrode terminal 111. The base body 121 is mainly configured to implement assembly of the electrical connecting base 120 in the electronic atomization device. In addition, the base body 121 is also configured to carry two conductive members 122 and limit positions of the two conductive members 122, to ensure that when the electrode terminal 111 is inserted into the insertion hole 1213, the conductive member 122 can elastically abut against the electrode terminal 111 to form an electrical connection with the electrode terminal 111. In addition, one end of the conductive member 122 may extend out of the insertion hole 1213 to form an electrical connection with the electrical control assembly 300. Specifically, the conductive member 122 may be electrically connected to the electrical control assembly 300 by welding a wire. When the conductive member 122 is close to the electrical control assembly 300, the conductive member 122 may further directly extend to be attached and electrically connected to the electrical control assembly 300.

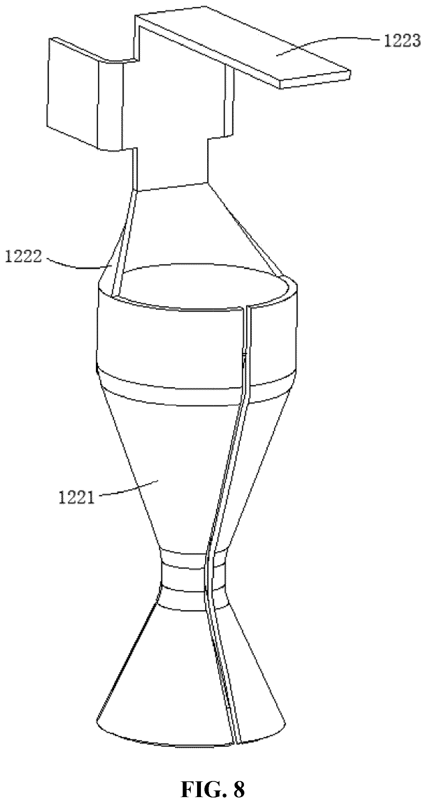

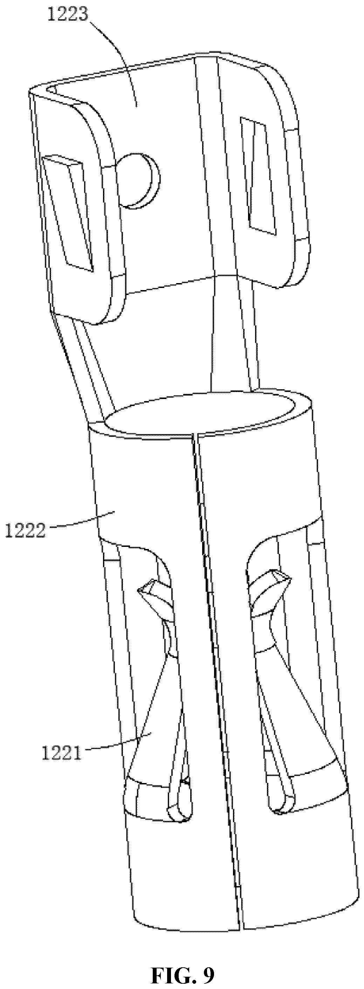

In an embodiment, referring to FIG. 8 and FIG. 9, the conductive member 122 includes at least two elastic sheets 1221 that are spaced apart from one another along a circumferential direction and that are configured to elastically abut against the outer peripheral wall of the electrode terminal 111 respectively. During assembly, the electrode terminal 111 of the battery core 110 is inserted into the insertion hole 1213 and is inserted between the elastic sheets 1221, so that the elastic sheets 1221 elastically abut against different outer peripheral walls of the electrode terminal 111 respectively, to ensure good contact between the electrode terminal 111 and the conductive member 122.

In an embodiment, referring to FIG. 8, the elastic sheets 1221 are enclosed to form insertion space, and the insertion space is arranged to be large at both ends and small in the middle. In other words, the elastic sheets 1221 are arranged in an arc-shaped concave shape, so that abutting firmness between the elastic sheets 1221 and the electrode terminal 111 can be improved.

In an embodiment, referring to FIG. 8 and FIG. 9, the conductive member 122 further includes a connecting sheet 1222 and a conductive sheet 1223. The connecting sheet 1222 is configured to connect the elastic sheets 1221 into a whole. The conductive sheet 1223 is connected to the connecting sheet 1222. The conductive sheet 1223 is configured to be electrically connected to the electrical control assembly 300.

In an embodiment, referring to FIG. 3, FIG. 6, and FIG. 10, the battery assembly 100 further includes a protective base 130. The protective base 130 is fixedly connected to the battery core 110. An accommodating cavity 131 configured to accommodate the two electrode terminals 111 is formed on the protective base 130. The protective base 130 is fixedly connected to the side of the battery core 110 including the electrode terminals 111. When the battery core 110 is detached, the protective base 130 is detached together with the battery core 110, and the two electrode terminals 111 of the detached battery core 110 may be accommodated in the accommodating cavity 131 of the protective base 130, to prevent a short circuit with another battery core 110 after the battery core 110 is recycled.

In an embodiment, referring to FIG. 3, the electrical connecting base 120 includes a plug-in portion 1211, the plug-in portion 1211 is in pluggable fit with the accommodating cavity 131, and the insertion hole 1213 passes through the plug-in portion 1211. When the plug-in portion 1211 is inserted into the accommodating cavity 131, the electrode terminal 111 in the accommodating cavity 131 is just inserted into the insertion hole 1213 in the plug-in portion 1211, to implement the electrical connection between the electrode terminal 111 and the electrical connecting base 120.

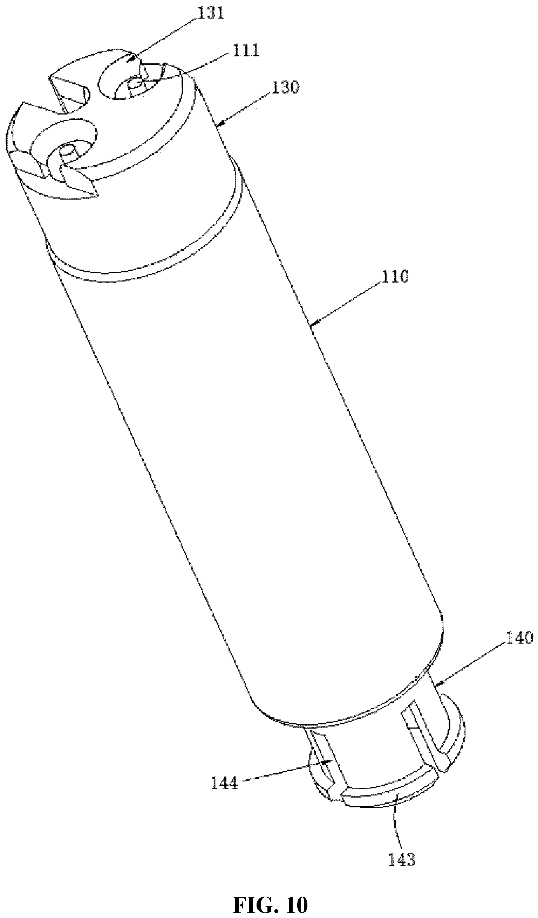

In an embodiment, referring to FIG. 3 and FIG. 10, two accommodating cavities 131 spaced apart are formed in the protective base 130, the two electrode terminals 111 are respectively accommodated in the two accommodating cavities 131, the electrical connecting base 120 includes two plug-in portions 1211 spaced apart, and the two insertion holes 1213 pass through the two plug-in portions 1211 respectively. Through the foregoing arrangement, the two separated electrode terminals 111 can be completely isolated, to avoid a short circuit. It may be understood that, in other embodiments of this application, only one accommodating cavity 131 may be formed in the protective base 130, the two electrode terminals 111 are accommodated at an interval in the accommodating cavity 131, the electrical connecting base 120 includes one plug-in portion 1211, the two insertion holes 1213 respectively run through the plug-in portion 1211 and are spaced apart, and when the plug-in portion 1211 is inserted into the accommodating cavity 131, the two electrode terminals 111 are respectively inserted into the two insertion holes 1213.

Optionally, the protective base 130 may be fixed on the battery core 110 in an adhesive manner, for example, may be adhered through an adhesive or a double-sided adhesive. Alternatively, the protective base 130 may be fixed on the battery core 110 in an interference-assembly manner.

In an embodiment, referring to FIG. 3 and FIG. 7, the base body 121 includes a connecting portion 1212 and two plug-in portions 1211, the connecting portion 1212 is fixed in the electronic atomization device, the two plug-in portions 1211 are respectively formed on the same side of the connecting portion 1212, and the insertion holes 1213 passes through the connecting portion 1212 and the plug-in portion 1211 respectively. In an embodiment, the electronic atomization device includes a housing 400, the battery core 110, the electrical connecting base 120, the protective base 130, and the battery cover 150 are all mounted in the housing 400, the battery cover 150 is detachably connected to the housing 400, and the connecting portion 1212 in the base body 121 of the electrical connecting base 120 is fixed in the housing 400.

In an embodiment, referring to FIG. 2 and FIG. 6, a battery compartment 430 is formed in the housing 400, the battery core 110 and the protective base 130 are both accommodated in the battery compartment 430, and the electrical connecting base 120 at least partially extends into the battery compartment 430 to be connected to the battery core 110. For example, the electrical connecting base 120 may be entirely mounted in the battery compartment 430, or the electrical connecting base 120 may be partially arranged in the battery compartment 430, and another part of the electrical connecting base 120 is located in a cavity of the housing 400 configured to mount the electrical control assembly 300, to be electrically connected to the electrical control assembly 300.

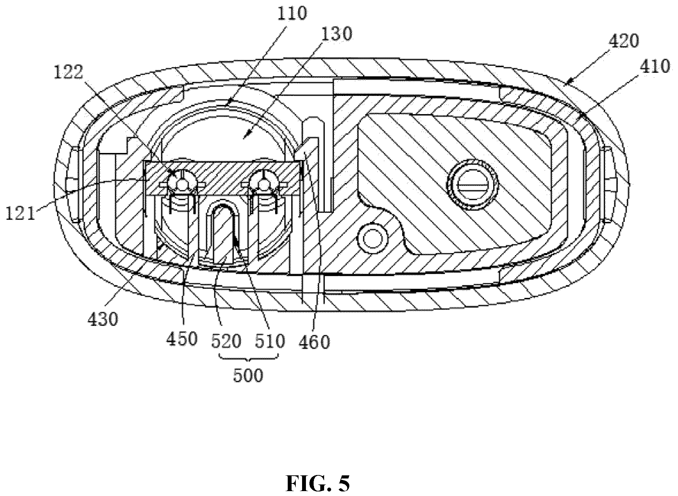

In an embodiment, to ensure that after the battery core 110 and the protective base 130 are inserted into the battery compartment 430, the protective base 130 is just in pluggable fit with the electrical connecting base 120, that is, the plug-in portion 1211 is just inserted into the accommodating cavity 131, and the electrode terminal 111 is just inserted into the insertion hole 1213. Therefore, it is necessary to cause an insertion direction of the plug-in portion 1211 and the accommodating cavity 131, an insertion direction of the electrode terminal 111 and the insertion hole 1213, and an insertion direction of the protective base 130 inserted into the battery compartment 430 to be parallel to each other. Therefore, referring to FIG. 5, FIG. 5 is a schematic transverse cross-sectional view of the electronic atomization device corresponding to the protective base 130. A guiding structure 500 configured to guide plugging-in of the protective base 130 is formed between the inner wall of the battery compartment 430 and the protective base 130. Through the guiding structure 500, accurate assembly of the battery core 110 and the protective base 130 plugged in place may be ensured provided that the battery core 110 and the protective base 130 are pushed along a plugging-in direction.

In an embodiment, referring to FIG. 5, the guiding structure 500 includes a guiding groove 510 formed on the protective base 130 and a guiding block 520 formed on the inner wall of the battery compartment 430. When the protective base 130 is inserted into the battery compartment 430, the guiding block 520 is inserted into the guiding groove 510, to guide plugging-in of the protective base 130.

Optionally, the battery core 110 is cylindrical, the electrode terminal 111 extends along an axial direction of the battery core 110, and the accommodating cavity 131, the plug-in portion 1211, the insertion hole 1213, the guiding groove 510, and the guiding block 520 all extend along the axial direction of the battery core 110, to ensure that the battery core 110 forms an electrical connection with the electrical connecting base 120 when the protective base 130 is inserted in place. It may be understood that, in other embodiments, the battery core 110 may alternatively be arranged in a rectangular shape, an elliptical shape, or another regular shape. This is not uniquely limited herein.

In an embodiment, the electrical connecting base 120 may be directly mounted in the battery compartment 430, and the conductive member 122 extends out of the battery compartment 430 to be electrically connected to the electrical control assembly 300. In other embodiments of this application, the plug-in portion 1211 of the electrical connecting base 120 may alternatively be arranged in the battery compartment 430, and the connecting portion 1212 extends out of the battery compartment 430 to be directly electrically connected to the electrical control assembly 300. This is not uniquely limited herein.

In an embodiment, referring to FIG. 5, the battery cover 150 is arranged to be fixed to the housing 400 of the electronic atomization device by threaded connection. Specifically, an external thread is provided on the battery cover 150, and an internal thread is provided at a position of the bottom of the housing 400 corresponding to the battery cover 150. The battery cover 150 may be screwed into the housing 400 in a rotating manner, or the battery cover 150 may be detached from the housing 400 in a rotating manner, so that the operation is convenient, and the connection is stable and sealed. It may be understood that, in other embodiments of this application, the battery cover 150 may alternatively be detachably connected to the housing 400 in other manners, such as clamping or screw-locking.

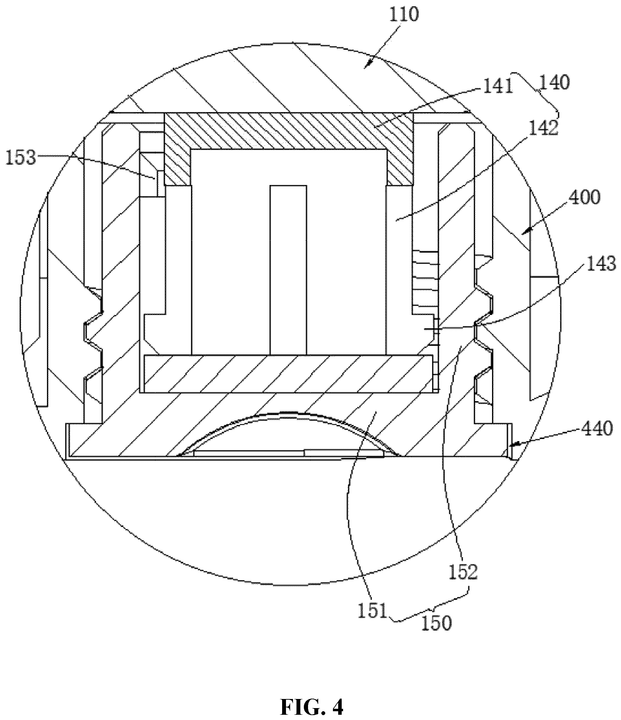

In an embodiment, referring to FIG. 4, FIG. 6, and FIG. 7, the battery assembly 100 further includes an adapter base 140. The adapter base 140 is fixedly connected to the side of the battery core 110 facing away from the electrical connecting base 120. The battery cover 150 is detachably connected to the adapter base 140. When the battery cover 150 is detached form the adapter base, the adapter base 140 and the battery core 110 can be removed together. In other words, when the battery cover 150 is detached, the battery cover 150, the adapter base 140, and the battery core 110 may be detached at one time, which facilitates disassembly and assembly.

In an embodiment, referring to FIG. 4 and FIG. 6, the battery cover 150 is mounted around the adapter base 140, the inner side wall of the battery cover 150 is provided with a first abutting portion 153, the outer side wall of the adapter base 140 is provided with a second abutting portion 143, and the first abutting portion 153 is located on the side of the second abutting portion 143 facing the battery core 110; and the first abutting portion 153 abuts against the second abutting portion 143, or the first abutting portion 153 abuts against the second abutting portion 143 after withdrawing in a direction away from the electrical connecting base 120 by a preset distance.

That the first abutting portion 153 abuts against the second abutting portion 143 means that after the battery cover 150 and the adapter base 140 are both assembled, the first abutting portion 153 just abuts against the second abutting portion 143, and the first abutting portion 153 is located on the side of the second abutting portion 143 facing the battery core 110. Therefore, when moving along the direction facing away from the electrical connecting base 120, the first abutting portion 153 can push the second abutting portion 143, to sequentially separate the adapter base 140 and the battery core 110 along the direction away from the electrical connecting base 120, so that the battery cover 150, the adapter base 140, and the battery core 110 may be detached at one time. When the battery assembly 100 further includes the protective base 130, the battery cover 150, the adapter base 140, the battery core 110, and the protective base 130 may be detached together at one time. The foregoing structural design corresponds to a situation in which the battery cover 150 only moves linearly and does not rotate when being detached. For example, the battery cover 150 is fixed to the housing 400 by snap-fitting, or the battery cover 150 is interference-plugged to the housing 400, or the battery cover 150 is locked to the housing 400 through screws.

In addition, referring to FIG. 4, the first abutting portion 153 abuts against the second abutting portion 143 after withdrawing in a direction away from the electrical connecting base 120 by the preset distance means that after the battery cover 150 and the adapter base 140 are both assembled, the first abutting portion 153 and the second abutting portion 143 are spaced apart from each other along the axial direction of the battery core 110. After the battery cover 150 withdraws away from the electrical connecting base 120 by the preset distance, the first abutting portion 153 abuts against the second abutting portion 143, so that the protective base 130 and the battery core 110 may be driven to be removed together through the battery cover 150. This structural design generally corresponds to a situation in which the battery cover 150 is fixed to the housing 400 by threaded connection. When the battery cover 150 is detached, the battery cover 150 needs to be rotated. To prevent the rotation of the battery cover 150 from driving the battery core 110 to rotate, it is designed that after the battery cover 150 is rotated and removed by the preset distance, the battery core 110 is removed through the battery cover 150 after the battery cover 150 is separated from the housing 400.

Optionally, the adapter base 140 may be fixed on the battery core 110 in an adhesive manner, for example, may be adhered through an adhesive or a double-sided adhesive. Alternatively, the adapter base 140 may be fixed on the battery core 110 in an interference-assembly manner.

In a specific embodiment, referring to FIG. 4 and FIG. 6, the battery cover 150 is arranged to be fixed to the housing 400 of the electronic atomization device by threaded connection. The battery assembly 100 further includes the adapter base 140. The adapter base 140 is fixedly connected to the side of the battery core 110 facing away from the electrical connecting base 120. The battery cover 150 is mounted around the adapter base 140. The inner side wall of the battery cover 150 is provided with the first abutting portion 153. The outer side wall of the adapter base 140 is provided with the second abutting portion 143. The first abutting portion 153 is located on the side of the second abutting portion 143 facing the battery core 110. The first abutting portion 153 abuts against the second abutting portion 143 after withdrawing in a direction away from the electrical connecting base 120 by the preset distance.

In an embodiment, referring to FIG. 4 and FIG. 6, the adapter base 140 includes a top plate 141 adhered to the battery core 110 and a first side plate 142 formed on a side of the top plate 141 facing away from the battery core 110, a first through slot 144 extending along the axial direction of the battery core 110 is formed on the first side plate 142, and the second abutting portion 143 is an annular plate formed on the outer side wall of the first side plate 142. The arrangement of the first through slot 144 can improve elasticity of the first side plate 142, so that during assembly, when the first side plate 142 is inserted into the battery cover 150, the second abutting portion 143 can overcome the first abutting portion 153 to snap into a side of the first abutting portion 153 facing away from the electrical connecting base 120.

In an embodiment, referring to FIG. 4, the battery cover 150 includes a bottom plate 151 and a second side plate 152 formed on the side of the bottom plate 151 facing the electrical connecting base 120, an external thread is formed on the second side plate 152, and the second side plate 152 may be inserted into the battery compartment 430 and fixed to the housing 400 by threaded connection. The first abutting portion 153 is further formed on the inner side wall of the second side plate 152. The second side plate 152 is mounted around the first side plate 142. The first abutting portion 153 and the second abutting portion 143 may abut against each other.

Referring to FIG. 4, a counter bore 440 is formed on the outer end surface of the housing 400 corresponding to the battery compartment 430, and the bottom plate 151 is accommodated in the counter bore 440. A matching hole is formed on the bottom plate 151, and the matching hole is configured to match an external tool, so that the external tool can rotate to remove the battery cover 150.

In an embodiment, referring to FIG. 5 and FIG. 6, the battery core 110 is cylindrical, the battery compartment 430 is substantially semi-cylindrical, and a notch is provided on a radial side of the battery compartment 430. A bump 450 configured to limit the electrical connecting base 120 is formed on the inner wall of the battery compartment 430. Two sides of the notch of the battery compartment 430 are respectively provided with a hook 460. When the electrical connecting base 120 is assembled, the electrical connecting base 120 is snapped into the battery compartment 430 along a radial direction of the battery compartment 430 by overcoming the hook 460, and two opposite sides of clamped electrical connecting base 120 respectively abut between the bump 450 and the hook 460, to position the electrical connecting base 120. The bump 450 may be provided as two bumps 450 respectively disposed on two opposite sides of the guiding block 520, and heights of the two bumps 450 are higher than a height of the guiding block 520, to avoid structural interference between the guiding block 520 and the electrical connecting base 120.

In an embodiment, referring to FIG. 2, FIG. 5, and FIG. 6, the housing 400 includes an inner housing 410 and an outer housing 420. Most structures of the electrical control assembly 300, the atomizer 200, and the battery assembly 100 are mounted in the inner housing 410, the outer housing 420 is covered outside the inner housing 410, and the battery cover 150 is fixed to the outer housing 420 by threaded connection. In addition, a suction nozzle 600 is further included. The suction nozzle 600 is mounted around the outer top side of the inner housing 410. The suction nozzle 600 is fixed to the outer housing 420 by snap-fitting.

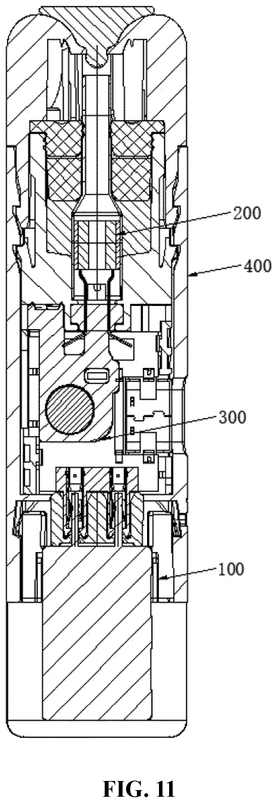

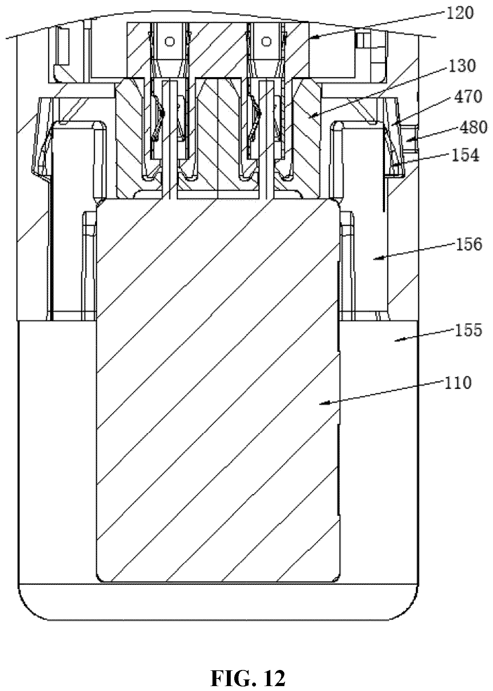

In another specific embodiment of this application, referring to FIG. 11 to FIG. 13, the battery cover 150 is configured to be fixed to the housing 400 of the electronic atomization device by snap-fitting. The battery cover 150 is not connected to the battery core 110. During detachment, the battery cover 150 may be removed first, and then the battery core 110 may be removed. In this way, although there is one more step, a structure of the entire battery assembly 100 can be simplified. In this embodiment, the battery cover 150 is fixed to the housing 400 by threaded connection, and the battery cover 150 may also be snap-connected to the housing 400.

Specifically, a first clamp portion is provided on the battery cover 150, a second clamp portion is provided on the inner wall of the housing 400. When the battery cover 150 is inserted into the battery compartment 430 in place, the first clamp portion and the second clamp portion are fixed to each other by snap-fitting.

In an embodiment, referring to FIG. 11 to FIG. 13, the first clamping portion is a clamping block 154, the second clamping portion is a clamping slot 470, and the clamping block 154 is snapped into the clamping slot 470. In other embodiments, alternatively, the first clamping portion is the clamping slot 470, the second clamping portion is the clamping block 154, and the clamping block 154 is snapped into the clamping slot 470.

In an embodiment, referring to FIG. 11, a through hole 480 is formed on the housing 400, the through hole 480 extends from the outer side wall of the housing 400 into the clamping slot 470, and the through hole 480 communicates with the clamping slot 470. When the clamping block 154 of the battery cover 150 is inserted into the clamping slot 470, the clamping block 154 is at least partially arranged directly facing the through hole 480. When the battery cover 150 needs to be detached, an acicular object may be inserted into the through hole 480 to push the clamping block 154 open, so that the clamping block 154 is separated from the clamping slot 470. Certainly, during actual operation, the battery cover 150 needs to be removed along a direction facing away from the battery compartment 430 when the acicular object is inserted into the through hole 480 to push the clamping block 154 open, so that detachment of the battery cover 150 is implemented. It may be understood that, in other embodiments of this application, the through hole 480 may not be provided, but a pressing portion is arranged on an exposed part of the battery cover 150, and the pressing portion is pressed to drive the clamping block 154 to be separated from the clamping slot 470. This is not uniquely limited herein.

In the foregoing embodiment, after the battery cover 150 is detached, the battery core 110 needs to be removed. To facilitate removal of the battery core 110, the battery core 110 at least partially needs to extend out of the housing 400. Specifically, referring to FIG. 11, the battery core 110 at least partially extends out of the housing 400. The battery cover 150 includes an insertion portion 155 and an external portion 156. The insertion portion 155 can be inserted into the housing 400 to form a detachable connection with the housing 400. The external portion 156 stops outside the housing 400. The exposed part of the battery core 110 is accommodated in the external portion 156. The clamping block 154 is formed on the outer side wall of the insertion portion 155.

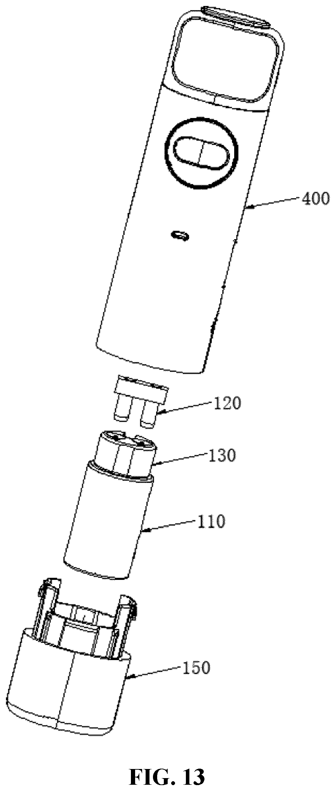

Referring to FIG. 11 and FIG. 13, a thickness of the insertion portion 155 is less than a thickness of the external portion 156, and the clamping block 154 is formed on the insertion portion 155, so that elasticity of the insertion portion 155 can be increased.

In another embodiment of this application, the battery cover 150 is mounted around the battery core 110 with an interference fit, so that the battery core 110 can be removed together with the battery cover 150 when the battery cover 150 is detached.

In another embodiment of this application, the battery cover 150 is mounted around the battery core 110 with an interference fit, the battery cover 150 is configured to be fixed to the housing 400 of the electronic atomization device by snap-fitting, and the battery core 110 is removed together with the battery cover 150 when the battery cover 150 is detached.

In another embodiment of this application, the battery assembly 100 further includes the adapter base 140, the adapter base 140 is fixedly connected to the side of the battery core 110 facing away from the electrical connecting base 120, the battery cover 150 is mounted around the adapter base 140 with an interference fit, and when the battery cover 150 is detached, the adapter base 140, the battery core 110, and the protective base 130 are detached together.

In an embodiment, referring to FIG. 11, a transverse section of the battery cover 150 is similar to a transverse section of the housing 400, and the housing 400 is in a flat circular shape. To ensure that the battery cover 150 limits the battery core 110, a convex strip is protruding on the inner wall of the battery cover 150, and the convex strip is configured to abut against the outer wall of the battery core 110.

The foregoing descriptions are merely preferred embodiments of this application, but are not intended to limit this application. Any modification, equivalent replacement, and improvement made within the spirit and principle of this application shall fall within the protection scope of this application.

## Claims

1. A battery assembly (100), configured to supply power to an atomizer (200) of an electronic atomization device, **characterized in that** the battery assembly (100) comprises:
a battery core (110),
an electrical connecting base (120), and
a battery cover (150),
wherein the battery core (110) comprises two electrode terminals (111); two insertion holes are formed on the electrical connecting base (120), the two electrode terminals (111) are respectively in pluggable fit with the two insertion holes (1213) and are detachable from the electrical connecting base (120), the electrode terminals (111) form an electrical connection with the electrical connecting base (120) after being inserted into the insertion holes (1213), and the electrical connecting base (120) is configured to be electrically connected to the atomizer (200); and the battery cover (150) is configured to detachably cover a side of the battery core (110) facing away from the electrical connecting base (120).

2. The battery assembly (100) according to claim 1, wherein the electrical connecting base (120) comprises a base body (121) and a conductive member (122), each of the insertion holes (1213) is formed in the base body (121), the conductive member (122) is arranged in each of the insertion holes (1213), and the conductive member (122) elastically abuts against the electrode terminal (111) when the electrode terminal (111) is inserted into the insertion hole (1213).

3. The battery assembly (100) according to claim 2, wherein the conductive member (122) comprises at least two elastic sheets (1221) spaced apart from one another along a circumferential direction and configured to elastically abut against an outer peripheral wall of the electrode terminal (111) respectively.

4. The battery assembly (100) according to claim 1, wherein the battery assembly (100) further comprises:
a protective base (130) fixedly connected to the battery core (110), and
an accommodating cavity (131) configured to accommodate the two electrode terminals (111), the accommodating cavity (131) is formed on the protective base (130),
wherein the electrical connecting base (120) comprises a plug-in portion (1211), the plug-in portion (1211) is in pluggable fit with the accommodating cavity (131), and the insertion hole (1213) passes through the plug-in portion (1211).

5. The battery assembly (100) according to claim 1, wherein the battery cover (150) is configured to be fixed to a housing (400) of the electronic atomization device by threaded connection; or
the battery cover (150) is configured to be fixed to the housing (400) of the electronic atomization device by snap-fitting.

6. The battery assembly (100) according to any one of claims 1 to 5, wherein the battery assembly (100) further comprises: an adapter base (140) fixedly connected to the side of the battery core (110) facing away from the electrical connecting base (120);
wherein the battery cover (150) is detachably connected to the adapter base (140), and the adapter base (140) and the battery core (110) are removed together when the battery cover (150) is detached form the adapter base (140).

7. The battery assembly (100) according to claim 6, wherein the battery cover (150) is mounted around the adapter base (140), an inner side wall of the battery cover (150) is provided with a first abutting portion (153), an outer side wall of the adapter base (140) is provided with a second abutting portion (143), and the first abutting portion (153) is located on a side of the second abutting portion (143) facing the battery core (110); and
the first abutting portion (153) abuts against the second abutting portion (143), or the first abutting portion (153) abuts against the second abutting portion (143) after withdrawing in a direction away from the electrical connecting base (120) by a preset distance.

8. The battery assembly (100) according to any one of claims 1 to 4, wherein the battery cover (150) is mounted around the battery core (110) with an interference fit; or
the battery assembly (100) further comprises an adapter base (140), the adapter base (140) is fixedly connected to the side of the battery core (110) facing away from the electrical connecting base (120), and the battery cover (150) is mounted around the adapter base (140) with an interference fit.

9. The battery assembly (100) according to claim 3, wherein the conductive member (122) further comprises a connecting sheet (1222) and a conductive sheet (1223), the connecting sheet (1222) is configured to connect the elastic sheets (1221) into a whole, the conductive sheet (1223) is connected to the connecting sheet (1222).

10. The battery assembly (100) according to claim 7, wherein the adapter base (140) comprises a top plate (141) adhered to the battery core (110) and a first side plate (142) formed on a side of the top plate (141) facing away from the battery core (110),
a first through slot (144) extending along an axial direction of the battery core (110) is formed on the first side plate (142), and the second abutting portion (143) is an annular plate formed on an outer side wall of the first side plate (142).

11. An electronic atomization device, comprising:
an atomizer (200),
a housing (400), and
the battery assembly (100) according to any one of claims 1 to 10,
wherein the battery assembly (100) is electrically connected to the atomizer (200), both the battery assembly (100) and the atomizer (200) are mounted in the housing (400), and the battery cover (150) is detachably connected to the housing (400).

12. The electronic atomization device according to claim 11, wherein the battery cover (150) is provided with a buckle, an inner side wall of the housing (400) is provided with a clamping slot (470), and the buckle is snapped in the clamping slot (470); and the housing (400) is further provided with a through hole (480) extending from an outer side wall of the housing (400) to the clamping slot (470).

13. The electronic atomization device according to claim 11, when depend on claim 4, wherein a battery compartment (430) is formed in the housing (400), the battery core (110) and the protective base (130) are both accommodated in the battery compartment (430), and the electrical connecting base (120) at least partially extends into the battery compartment (430) to be connected to the battery core (110).

14. The electronic atomization device according to claim 13, wherein the battery cover (150) comprises a bottom plate (151) and a second side plate (152) formed on a side of the bottom plate (151) facing the electrical connecting base (120), an external thread is formed on the second side plate (152), the second side plate (152) is configured to be inserted into the battery compartment (430) and fixed to the housing (400) by threaded connection.

15. The electronic atomization device according to claim 14, wherein a counter bore (440) is formed on an outer end surface of the housing (400) corresponding to the battery compartment (430), and the bottom plate (151) is accommodated in the counter bore (440).
